# EUROPEAN PATENT APPLICATION

(11) **EP 4 571 155 A1**
(43) Date of publication of application: **18.06.2025**
(21) Application number: 23217037.3
(22) Date of filing: 15.12.2023
(51) Int. Cl.: F16K 1/42, F16K 3/24, F16K 11/044

(54) **A VALVE WITH A SEALING VALVE SEAT**

(71) Applicant: Danfoss A/S, 6430 Nordborg (DK)
(72) Inventor: CLAUSEN, Anders Østergaard, 6430 Nordborg (DK); UMEK, Matej, 6430 Nordborg (DK); ZAGAR, Tomaz, 6430 Nordborg (DK); MARINKO, Alja, 6430 Nordborg (DK); DROBEZ, Benjamin, 6430 Nordborg (DK)
(74) Representative: Inspicos P/S

(57) **Abstract**

A valve (1) comprising a valve housing (2) with a first port (4) and a second port (5) is disclosed. The valve housing (2) accommodates a guiding insert (12) and a valve element (8) arranged movably inside the guiding insert (12). The guiding insert (12) defines an opening (13) towards the second port (5), and the position of the valve element (8) relative to the guiding insert (12) thereby determines a fluid flow in a fluid connection between the first port (4) and the second port (5). The guiding insert (12) is mounted inside the valve housing (2) via at least one sealing element (18, 19) arranged between the guiding insert (12) and a wall part of the valve housing (2) or of a separate element mounted inside the valve housing (2). The at least one sealing element (18, 19) further forms a valve seat for the valve element (8), the valve element (8) abutting the sealing element (18, 19) when it is arranged at an end position.

## Description

### FIELD OF THE INVENTION

The present invention relates to a valve with a valve housing accommodating a guiding insert and a valve element arranged movably inside the guiding insert, so as to control a fluid flow through the valve.

### BACKGROUND OF THE INVENTION

Controllable valves normally comprise a movable valve element accommodated in a valve housing in such a manner that movements of the valve element control the fluid flow through the valve. For instance, the position of the movable valve element may determine at least one opening degree of the valve. The movements of the valve element, and thereby the fluid flow through the valve, may be controlled by appropriately controlling an actuator being operably connected to the movable valve element.

The valve element may, e.g., move along at least one opening formed inside the valve, in such a manner that the position of the valve element relative to the opening defines a cross sectional size of the opening being available for fluid flowing therethrough, thus defining an opening degree of the valve with respect to a fluid connection which includes the opening. The opening may be formed in a guiding insert which is mounted inside the valve housing. This would allow the opening to be formed with an accurate size and shape in an easy and cost effective manner. However, mounting such a separate guiding insert inside the valve introduces the risk of internal leaks in the valve.

Furthermore, in order to prevent internal leaks in the valve when the fluid passage through the valve is closed, the movable valve element will normally abut against a valve seat. The valve seat may form an integral part of the valve housing, or it may be provided as a separate part. Forming the valve seat as an integral part of the valve housing is difficult, and this may lead to inaccuracies or high tolerances of the valve seat, which in turn introduces a risk of internal leaks when the valve element abuts the valve seat. On the other hand, mounting the valve seat as a separate part is also difficult and may lead to inaccuracies and leaks between the valve seat and adjacent parts of the valve. Furthermore, a separate valve seat may vibrate during operation of the valve, causing noise as well as wear on the valve.

### DESCRIPTION OF THE INVENTION

It is an object of embodiments of the invention to provide a valve in which the risk of internal leaks is decreased as compared to prior art valves.

It is a further object of embodiments of the invention to provide a valve which is easy and cost effective to manufacture and assemble.

The invention provides a valve comprising a valve housing with a first port and a second port, the valve housing accommodating a guiding insert and a valve element arranged movably inside the guiding insert, the guiding insert defining an opening towards the second port, and the position of the valve element relative to the guiding insert thereby determining a fluid flow in a fluid connection between the first port and the second port,
wherein the guiding insert is mounted inside the valve housing via at least one sealing element arranged between the guiding insert and a wall part of the valve housing or of a separate element mounted inside the valve housing, and wherein the at least one sealing element further forms a valve seat for the valve element, the valve element abutting the sealing element when it is arranged at an end position.

Thus, the valve according to the invention comprises a valve housing with a first port and a second port, the valve thus defining a fluid connection between the first port and the second port. Fluid flowing through the valve may flow in either direction, i.e. from the first port, acting as a fluid inlet, to the second port, acting as a fluid outlet, or from the second port, acting as a fluid inlet, to the first port, acting as a fluid outlet. The direction of the fluid flow through the valve may even be selected, depending on the requirements at a given point in time.

The valve housing accommodates a guiding insert and a valve element arranged movably inside the guiding insert. Thus, the guiding insert guides the movements of the valve element. Furthermore, the guiding insert is a separate element which is mounted inside the valve housing. As described above, this allows the guiding insert, including various features thereof, to be manufactured in an accurate, easy and cost effective manner.

The guiding insert defines an opening towards the second port. Thus, the valve element moves along the opening towards the second port, and thereby the position of the valve element relative to the guiding insert determines a fluid flow in a fluid connection between the first port and the second port, since the position of the valve element relative to the opening defines a cross sectional size of the opening being available for fluid flowing therethrough. Since the opening is defined in the separate guiding insert, it can be formed with high accuracy in an easy and cost effective manner. Accordingly, the fluid flow through the valve can be controlled with high accuracy, e.g. with desired flow characteristics.

The guiding insert is mounted inside the valve housing via at least one sealing element arranged between the guiding insert and a wall part of the valve housing or of a separate element mounted inside the valve housing. Thus, the sealing element is arranged between the guiding insert and a part of the valve arranged adjacent thereto. Accordingly, the risk of internal leaks in the region around guiding insert is minimised.

The sealing element further forms a valve seat for the valve element, and the valve element abuts the sealing element when it is arranged at an end position, preferably an end position which defines a fully closed fluid connection between the first port and the second port. Thus, the valve seat which, in cooperation with the valve element positioned in the end position, ensures that the fluid connection between the first port and the second port is appropriately closed is the same element as the sealing element which prevents internal leaks at the guiding insert. In other words, the sealing element has a dual function as sealing between the guiding insert and the wall part and as a valve seat for the movable valve element.

Accordingly, it is not necessary to mount a separate valve seat in the valve. This makes it easier and less complicated to provide the valve seat inside the valve housing, and the costs of manufacturing the valve are further reduced, because fewer parts are required. In addition, providing the valve seat in the form of a sealing element which is firmly fixated and kept in position between the guiding insert and the wall part of the valve housing or of a separate element mounted inside the valve housing, significantly reduces the risk of vibrations of the valve seat during operation of the valve, and the noise and wear associated therewith. Finally, the sealing element, acting as the valve seat, ensures that the valve element is arranged in sealing abutment with the valve seat, thus minimising the risk of internal leaks when the fluid connection between the first port and the second port is fully closed.

The at least one sealing element may define a cross section with a stepped shape. According to this embodiment, the at least one sealing element may be shaped in a manner which matches the shapes of the guiding insert and the wall part which are arranged in contact with the sealing element. This ensures a tight sealing between the guiding insert and the wall part, thus minimising the risk of internal leaks. Furthermore, the stepped shape allows a portion of the sealing element to protrude from the interface between the guiding insert and the wall part, thus enabling the sealing element to act as a valve seat by the valve element abutting the protruding portion.

The guiding insert may be made from a composite material. The composite material could, e.g., be a polymer based material, e.g. polyphenylene sulfide (PPS), polybutylene terephthalate (PBT), glass filled polymer (GF), acrylonitrile butadine styrene (ABS), polycarbonate (PC), or a combination of two of more of these materials. Such composite materials are known to be durable, low cost and lightweight. Accordingly, forming the separate guiding insert from a composite material results in a valve, where the part of the valve which the movable valve element moves against is durable and lightweight, and can be manufactured at low costs. Furthermore, it is easy to manufacture the guiding insert with an opening having a shape and size which matches various requirements of the valve, e.g. with regard to flow characteristics.

Other parts of the valve, e.g. the valve housing and/or the movable valve element, may further be made from a composite material. For instance, the valve element may be made from polyphenylsulfone (PPSU). This would, e.g. allow for a valve element with a complex shape to be provided in an easy and cost effective manner.

The valve may be a three-way valve and the valve housing may further have a third port, and the guiding insert may further define an opening towards the third port, and the position of the valve element relative to the guiding insert may further determine a fluid flow in a fluid connection between the first port and the third port.

According to this embodiment, the valve may establish fluid connections between the first port and each of the second port and the third port. Thus, in the case that the first port forms a fluid inlet of the valve, the second port and the third port each forms a fluid outlet of the valve. In this case, fluid flow received in the valve via the first port may be selectively distributed to the second port and/or the third port. In the case that the first port forms a fluid outlet of the valve, the second port and the third port each forms a fluid inlet of the valve. In this case, fluid received in the valve via the second port and the third port, respectively, may be mixed before being supplied to the first port.

The valve element is, according to this embodiment, movable along the opening towards the second port as well as along the opening towards the third port. Thus, the position of the valve element determines the fluid flow in the fluid connection between the first port and the second port, as well as the fluid flow in the fluid connection between the first port and the third port, essentially in the manner described above.

Three-way valves may, e.g., be used in heat pumps or other applications where it may be desired to mix fluid flows.

The guiding insert may be mounted inside the valve housing via two sealing elements, each sealing element forming a valve seat for the valve element, the valve element abutting a first sealing element when it is arranged at a first end position, and the valve element abutting a second sealing element when it is arranged in a second, opposite, end position.

According to this embodiment, the first end position may define a fully open fluid connection between the first port and the second port and a fully closed fluid connection between the first port and the third port, and the second end position may define a fully open fluid connection between the first port and the third port and a fully closed fluid connection between the first port and the second port. Intermediate positions of the valve element may define partly open fluid connections between the first port and each of the second port and the third port.

Thus, when the valve element is in the first end position, the fluid connection between the first port and the second port is fully open, while the fluid connection between the first port and the third port is fully closed. On the other hand, when the valve element is in the second end position, the fluid connection between the first port and the third port is fully open, while the fluid connection between the first port and the second port is fully closed. Thus, when the valve element is moved from the first end position towards the second end position, the fluid connection between the first port and the second port is gradually closed, while the fluid connection between the first port and the third port is gradually opened. Similarly, when the valve element is moved from the second end position towards the first end position, the fluid connection between the first port and the second port is gradually opened, while the fluid connection between the first port and the third port is gradually closed.

In each of the first end position and the second end position, the valve element abuts one of the valve seats formed by the respective sealing elements. The remarks set forth above with regard to the first valve seat are equally applicable to the second valve seat. Thus, a tight sealing is obtained when either of the fluid connection between the first port and the second port or the fluid connection between the first port and the third port is fully closed. Furthermore, the risk of vibrations of each of the valve seats during operation of the valve is minimised.

The guiding insert may comprise at least a first guiding insert part defining the opening towards the second port and a second guiding insert part defining the opening towards the third port. The first guiding insert part and the second guiding insert part may, e.g., be substantially identical, and may, e.g., be joined to each other in such a manner that they mirror each other. As an alternative, the opening towards the second port and the opening towards the third port may be formed in a single guiding insert.

The opening towards the second port may be provided with a lip along an edge of the opening, the lip abutting the valve element at least in a region near the opening. According to this embodiment, when the valve element moves along the opening towards the second port, it remains in abutment with the lip along the edge of the opening. This ensures that the cross sectional size and shape of the opening being available for fluid flow, when the valve element is in a given position, is very well defined. Accordingly, a very well defined opening degree is obtained, resulting in very accurate and reliable flow characteristic of the valve. Furthermore, the lip allows for the flow characteristic of the valve to be designed to match certain requirement. For instance, the flow characteristic may be linear, but alternative flow characteristics may also be obtained. Thus, the valve can be controlled in a very accurate and reliable manner. Moreover, the abutment between the valve element and the lip may reduce the risk of internal leaks in the region near the movable valve element.

In the present context the term 'lip' should be interpreted to mean a relatively narrow feature arranged along the edge of the opening. For instance, the lip may be formed as a protrusion on the part of the valve where the opening is formed, and could, e.g., be moulded directly as a portion of that part during manufacture. As an alternative, the lip may be a separate part mounted on the part of the valve where the opening is formed.

Thus, since the abutment between the valve element and the edge of the opening is obtained via a lip provided along the edge of the opening, the accurate control of the valve is obtained with minimal risk of friction between the valve element and adjacent parts of the valve during movement of the valve element, notably the guiding insert, due to the small potential contact area, e.g. in case of deposited impurities, thus reducing sticking or similar which could affect the accuracy of the control of the valve.

The lip may follow a tapered or curved path along the edge of the opening. For instance, the edge may follow a tapered or curved path, and the lip may follow the path of the edge. Such a tapered or curved path ensures that the opening and closing of the fluid connection between the first port and the second port is performed smoothly, thus significantly reducing the risk of undesired flow effects, such as hammering. Furthermore, the tapered or curved path may be designed in a manner which provides a substantially linear relationship between the position of the valve element and a fluid flow through the opening, thus making it easier to accurately control the valve.

In the case that the valve is a three-way valve, the opening towards the third port may be provided with a similar lip.

The opening towards the second port may have a shape which is narrower in a region near the sealing element than in a region arranged opposite to the sealing element. According to this embodiment, the cross sectional shape of the opening towards the second port is such that a narrow opening or flow passage is defined when the valve element is in a position near the end position where it abuts the valve seat formed by the sealing element, i.e. when it is close to the fully closed position. On the other hand, when the valve element is in a region arranged opposite to the sealing element, e.g. when it is close to the fully open position, a wider opening or flow passage is defined. This ensures that, when the valve element is moved away from the end position where it abuts the valve seat formed by the sealing element, thus opening the passage through the opening, this results in a gradual and smooth opening of the passage. Similarly, when the valve element is moved towards the valve seat formed by the sealing element, thus closing the passage through the opening, this also takes place in a gradual and smooth manner.

For instance, the opening may have a substantially triangular shape, or a triangular-like shape with one or more of the edges of the triangle being curved. Alternatively, the opening may have a stepped shape.

The edge of the opening may follow a smooth curve between the region near the sealing element and the region arranged opposite to the sealing element. According to this embodiment, it is ensured that there are no abrupt changes in the cross sectional size of the flow passage through the opening as the valve element moves between the region near the sealing element and the region arranged opposite to the sealing element, e.g. between a first end position and a second end position. This provides well defined flow characteristics, accurate and reliable control of the valve, and significantly reduces the risk of undesired flow effects, such as hammering.

In the case that the valve is a three-way valve, the opening towards the third port may be shaped in a similar manner.

### BRIEF DESCRIPTION OF THE DRAWINGS

The invention will now be described in further detail with reference to the accompanying drawings in which
Figs. 1 and 2 illustrate a valve according to an embodiment of the invention,
Fig. 3 is a cross sectional view of the valve of Figs. 1 and 2,
Figs. 4 and 5 are details of the cross sectional view of the valve of Fig. 3 with a movable valve element in a first end position and a second end position, and
Figs. 6a-8b illustrate movement of a valve element for a valve according to an embodiment of the invention between a first end position and a second end position.

### DETAILED DESCRIPTION OF THE DRAWINGS

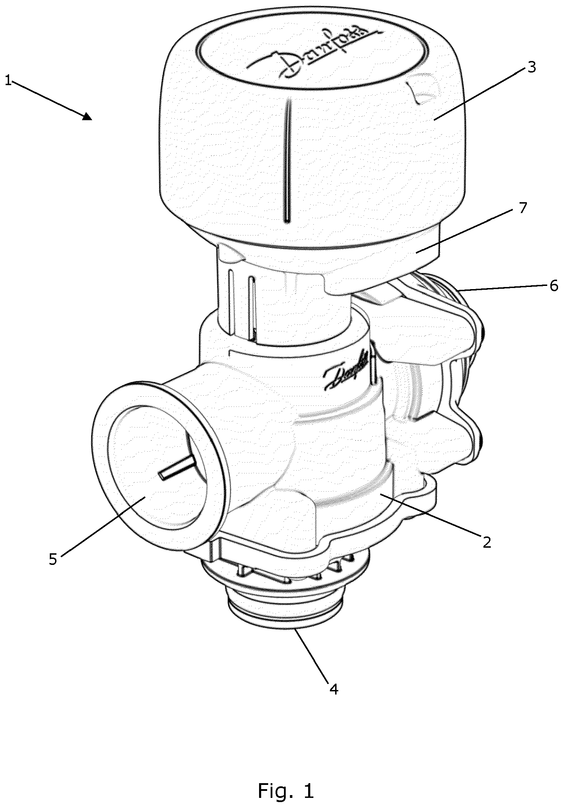

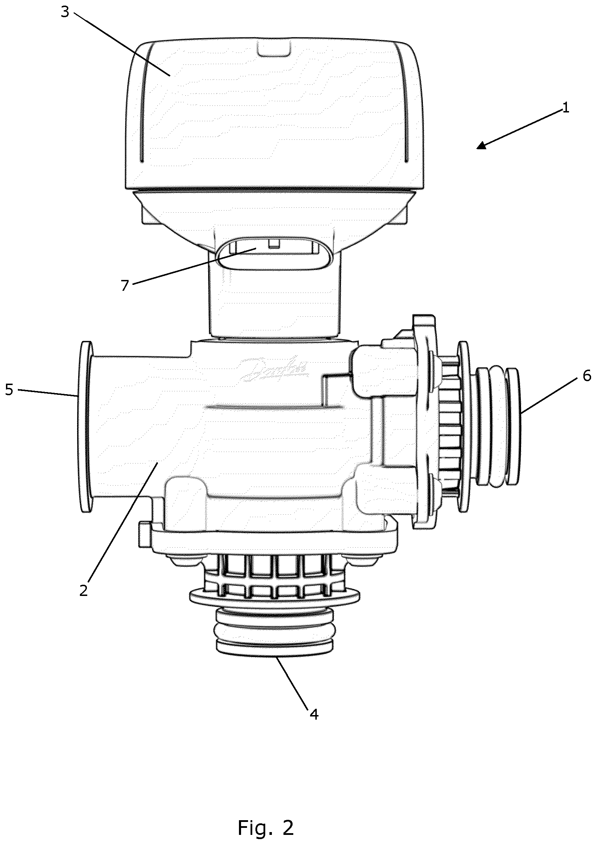

Figs. 1 and 2 illustrate a valve 1 according to an embodiment of the invention. Fig. 1 is a perspective view of the valve 1, and Fig. 2 is a side view of the valve 1.

The valve 1 comprises a valve housing 2 and an actuator housing 3 mounted on the valve housing 2. The valve housing 2 accommodates a movable valve element (not shown) and the actuator housing 3 accommodates an actuator (not shown) being operably connected to the movable valve element. Appropriate operation of the actuator will thus cause movements of the valve element, so as to control a fluid flow through the valve 1.

The valve housing 2 has three ports, in the form of a first port 4, a second port 5 and a third port 6. Fluid connections may be selectively established between the first port 4 and each of the second port 5 and the third port 6. Accordingly, the valve 1 is a three-way valve.

The actuator housing 3 comprises a power connection 7 allowing for power to be supplied to the actuator inside the actuator housing 3, for instance to an electric motor, such as an electric stepper motor, arranged inside the actuator housing 3.

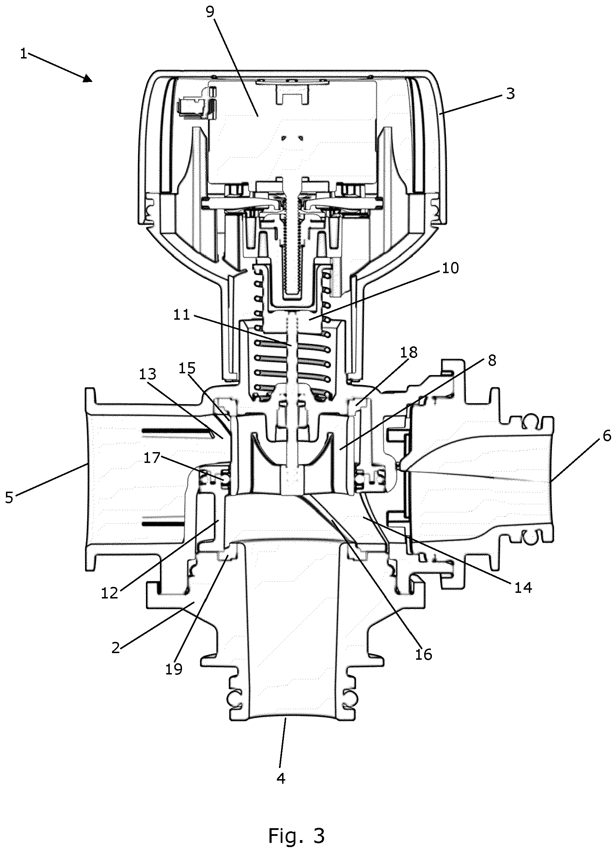

Fig. 3 is a cross sectional view of the valve 1 of Figs. 1 and 2. A valve element 8 is accommodated in the valve housing 2, and is operably connected to an actuator 9 accommodated in the actuator housing 3, via a cup-shaped connecting element 10 and a valve stem 11. Thus, appropriate operation of the actuator 9 causes the valve element 8 to move inside the valve housing 2 towards or away from the actuator housing 3.

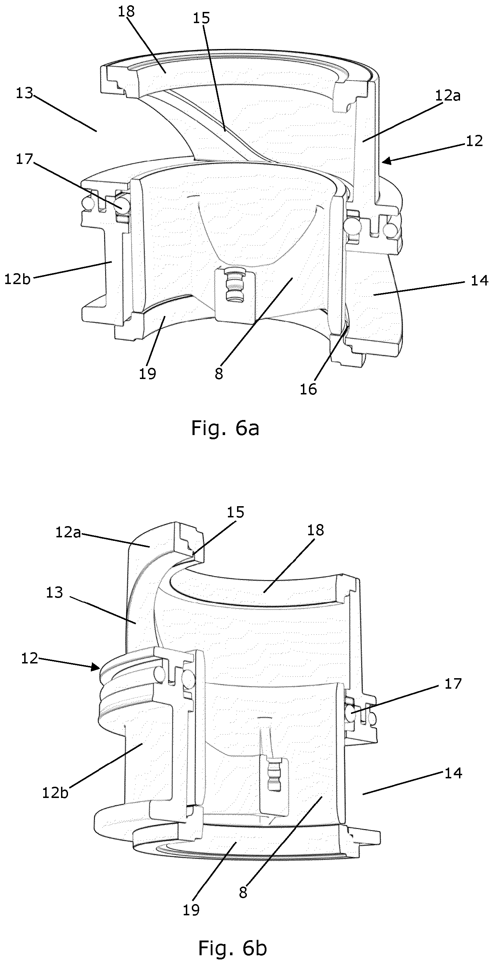

The valve element 8 is arranged within a guiding insert 12 in which an opening 13 towards the second port 5 and an opening 14 towards the third port 6 are formed. Thus, the valve element 8 moves along the opening 13 towards the second port 5 as well as along the opening 14 towards the third port 6. Accordingly, the position of the valve element 8 determines the cross sectional size of opening 13 as well as the cross sectional size of opening 14 being available for fluid flow through the respective openings 13, 14, and thereby whether or not and to which extent the fluid connection between the first port 4 and the second port 5 as well as the fluid connection between the first port 4 and the third port 6 is open. The movement of the valve element 8 will be described in further detail below with reference to Figs. 6a-8b.

The guiding insert 12 comprises a lip 15 arranged along an edge of the opening 13 towards the second port 5, and a lip 16 arranged along an edge of the opening 14 towards the third port 6. The lips 15, 16 abut the valve element 8, thus ensuring that the cross sectional size and shape of fluid passages through each of the openings 13, 14, at a given position of the valve element 8, are well defined. Thereby accurate and reliable control of the fluid flow through the valve 1 is obtained, and the risk of internal leaks is minimised. Furthermore, this is obtained with minimal friction between the movable valve element 8 and other parts of the valve 1, notably the guiding insert 12, since the valve element 8 only abuts the lips 15, 16 and a sealing element 17 which prevents leaking between the second port 5 and the third port 6.

The guiding insert 12 is mounted inside the valve housing 2 via a first sealing element 18 and a second sealing element 19, each being arranged between the guiding insert 12 and a wall part of the valve housing 2. Thus, the risk of internal leaks between the guiding insert 12 and the valve housing 2 is minimised. The sealing elements 18, 19 form a first valve seat 18 and a second valve seat 19, respectively, for the valve element 8.

In Fig. 3, the valve element 8 is positioned in a second end position, where it abuts the first valve seat 18. In the second end position, the fluid connection between the first port 4 and the second port 5 is fully closed, and the fluid connection between the first port 4 and the third port 6 is fully open. The valve element 8 can be moved to a first end position in which it abuts the second valve seat 19, and where the fluid connection between the first port 4 and the second port 5 is fully open and the fluid connection between the first port 4 and the third port 6 is fully closed.

Thus, sealing abutment between the valve element 8 and the respective valve seats 18, 19 is obtained when either of the fluid connections is fully closed. Furthermore, by providing elements 18, 19 with the dual purpose of sealing the connection between the guiding insert 12 and the wall parts of the valve housing 2, and acting as valve seats minimises the number of required parts for the valve 1, and minimises the risk of vibrations of the valve seats 18, 19 during operation of the valve 1.

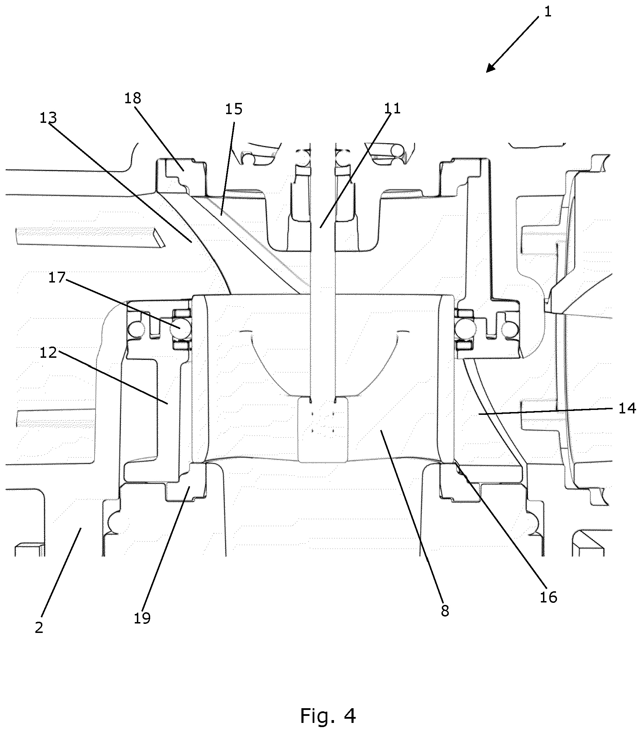

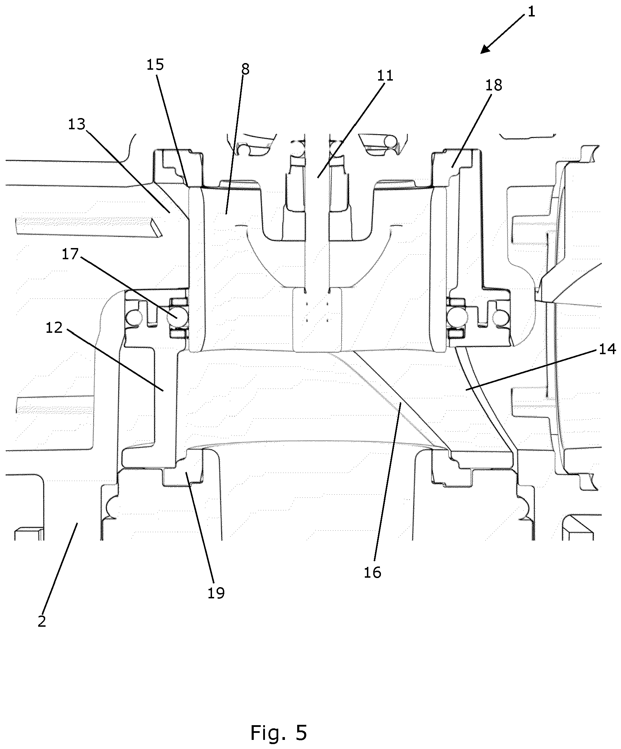

Figs. 4 and 5 are details of the cross sectional view of the valve 1 illustrated in Fig. 3. In Fig. 4 the valve element 8 is positioned in the first end position, abutting the second valve seat 19. In Fig. 5 the valve element 8 is positioned in the second end position, abutting the first valve seat 18, i.e. the position which is also illustrated in Fig. 3.

Figs. 6a-8b illustrate movement of a valve element 8 of a valve according to an embodiment of the invention. More particularly, Figs. 6a-8b show perspective cross sections of a guiding insert 12 and a movable valve element 8 arranged within the guiding insert 12 at three different positions between a first end position and a second end position. The guiding insert 12 and the valve element 8 illustrated in Figs. 6a-8b are of the kind illustrated in Figs. 3-5. For each position of the valve element 8, the guiding insert 12 and the valve element 8 are shown from two different angles in Figures denoted 'a' and 'b', respectively.

It can be seen that the guiding insert 12 comprises a first guiding insert part 12a in which the opening 13 towards the second port and the associated lip 15 is formed, and a second guiding insert part 12b, in which the opening 14 towards the third port and the associated lip 16 are formed. The sealing elements/valve seats 18, 19 can be seen.

In Figs. 6a and 6b the valve element 8 is positioned in the first end position, in which the valve element 8 abuts the second valve seat 19. Accordingly, the opening 13 towards the second port is fully open, and the opening 14 towards the third port is fully closed.

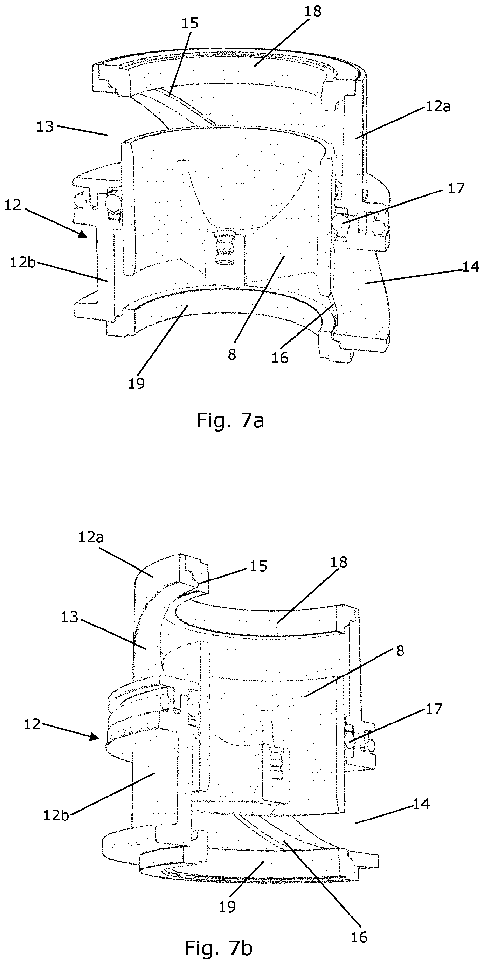

In Figs. 7a and 7b, the valve element 8 has been moved away from the first end position, and thereby away from the second valve seat 19, in a direction towards the second end position and the first valve seat 18. Accordingly, the opening 14 towards the third port has been opened, while the size of the opening 13 towards the second port has been decreased, and the fluid passage through the opening 13 towards the second port and the fluid passage through the opening 14 towards the third opening are now substantially of the same size.

Since the openings 13, 14 are shaped in such a manner that they are narrower in the region near the respective end positions than in the region where the first guiding insert part 12a and the second guiding insert part 12b are connected to each other, the fluid passage through the opening 14 towards the third port is opened smoothly and gradually, thus preventing undesired flow effects, such as hammering.

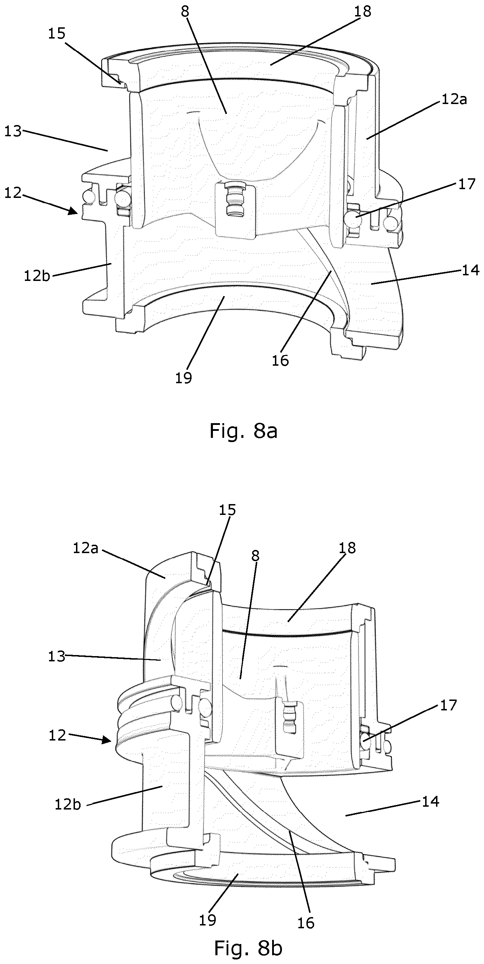

In Figs. 8a and 8b the valve element 8 is positioned in the second end position, in which the valve element 8 abuts the first valve seat 18. Thus, the opening 13 towards the second port is fully closed, while the opening 14 towards the third port is fully open. Again, due to the shape of the opening 13, the closing takes place in a smooth and gradual manner, thus preventing undesired flow effects, such as hammering.

## Claims

1. A valve (1) comprising a valve housing (2) with a first port (4) and at least a second port (5), the valve housing (2) accommodating a guiding insert (12) and a valve element (8) arranged movably inside the guiding insert (12), the guiding insert (12) defining an opening (13) towards the second port (5), and the position of the valve element (8) relative to the guiding insert (12) thereby determining a fluid flow in a fluid connection between the first port (4) and the second port (5),
wherein the guiding insert (12) is mounted inside the valve housing (2) via at least one sealing element (18, 19) arranged between the guiding insert (12) and a wall part of the valve housing (2) or of a separate element mounted inside the valve housing (2), and wherein the at least one sealing element (18, 19) further forms a valve seat for the valve element (8), the valve element (8) abutting the sealing element (18, 19) when it is arranged at an end position.

2. A valve (1) according to claim 1, wherein the at least one sealing element (18, 19) defines a cross section with a stepped shape.

3. A valve (1) according to claim 1 or 2, wherein the valve (1) is a three-way valve and the valve housing (2) further has a third port (6), and wherein the guiding insert (12) further defines an opening (14) towards the third port (6), and the position of the valve element (8) relative to the guiding insert (12) further determines a fluid flow in a fluid connection between the first port (4) and the third port (6).

4. A valve (1) according to claim 3, wherein the guiding insert (12) is mounted inside the valve housing (2) via two sealing elements (18, 19), each sealing element (18, 19) forming a valve seat for the valve element (8), the valve element (8) abutting a first sealing element (19) when it is arranged at a first end position, and the valve element (8) abutting a second sealing element (18) when it is arranged in a second, opposite, end position.

5. A valve (1) according to claim 4, wherein the first end position defines a fully open fluid connection between the first port (4) and the second port (5) and a fully closed fluid connection between the first port (4) and the third port (6), and the second end position defines a fully open fluid connection between the first port (4) and the third port (6) and a fully closed fluid connection between the first port (4) and the second port (5).

6. A valve (1) according to any of claims 3-5, wherein the guiding insert (12) comprises at least a first guiding insert part (12a) defining the opening (13) towards the second port (5) and a second guiding insert part (12b) defining the opening (14) towards the third port (6).

7. A valve (1) according to any of the preceding claims, wherein the opening (13) towards the second port (5) is provided with a lip (15) along an edge of the opening (13), the lip (15) abutting the valve element (8) at least in a region near the opening (13).

8. A valve (1) according to claim 7, wherein the lip (15) follows a tapered or curved path along the edge of the opening (13).

9. A valve (1) according to any of the preceding claims, wherein the opening (13) towards the second port (5) has a shape which is narrower in a region near the sealing element (18, 19) than in a region arranged opposite to the sealing element (18, 19).

10. A valve (1) according to claim 9, wherein the edge of the opening (13) follows a smooth curve between the region near the sealing element (18, 19) and the region arranged opposite to the sealing element (18, 19).
